# EUROPEAN PATENT SPECIFICATION

(11) **EP 2 431 147 B1**
(45) Date of publication and mention of the grant of the patent: **03.07.2013**
(21) Application number: 10380118.9
(22) Date of filing: 17.09.2010
(51) Int. Cl.: B29C 39/00, B29B 17/00, A47K 3/40

(54) **Shower base improved by the inclusion in its material of flexible fillings made of recycled car tyres**
Duschtasse, die durch Integration von aus wiederaufbereiteten Autoreifen hergestellten flexiblen Füllmassen in deren Material verbessert wird
Bac de douche améliorée par l'inclusion dans son matériau de remplissages souples fabriqués à partir de pneus de voiture recyclés

(30) Priority: 16.09.2010 ES 201031386
(43) Date of publication of application: 21.03.2012
(73) Proprietor: Anguiano Poliuretanos, S.L., 26300 Nájera (La Rioja) (ES)
(72) Inventor: Anguiano Martinez, Jacinto, 26300 Nájera (La Rioja) (ES)
(74) Representative: Gil-Vega, Victor

(56) References cited:
- WO-A1-2010/086632
- Anonymous: "Innovations in Shower Trays", IFS Chemicals , 10 July 2009 (2009-07-10), page 1, XP002663793, Retrieved from the Internet: URL:http://www.ifs-group.com/s9n35/Innovat ions-in-Shower-Trays.html [retrieved on 2011-11-17]

## Description

### FIELD OF THE INVENTION

The present invention refers to the inclusion of flexible fillings from recycled car tyres in the manufacture of shower bases, thereby improving their physical and mechanical properties.

### BACKGROUND OF THE INVENTION

A large number of very different materials are currently used in the manufacture of shower bases. These run from the most traditional ones, such as porcelain, to the most modern materials, which are made of resins such as polyester or polyurethane.

Shower bases made using resins are usually mixed with other additional materials or fillings, which provide certain properties which the resins themselves lack. These fillings are usually minerals, such as quartz or calcium carbonate, giving to the mixture the necessary strength and hardness for the manufacture of said bases.

The market is known to contain products which include materials consisting of recycled rubber (such as tyres) for children's play areas or the exterior tiles around swimming pools.

Thus documents US5635551 and GB2287710 describe a flexible material for panels, pails and washbasins. The mixture that constitutes the mould is composed of from 15% to 90% of recycled tyres, of polyethylene or polypropylene resins and other products such as glass fibre, caustic soda, ammonium phosphate, starch and pigments. The mixture is melted at from 230°C to 350°C, and it is moulded by extrusion or by pressure moulding. Document EP1114715 describes a synthetic mould that is moulded from recycled resins, and which is applicable to baths, washbasins and sinks, etc. The mixture contains polymeric flexible fillings of rubber mixed with a thermoplastic resin which may be reinforced by fillings such as glass fibre.

Document ES2329641 of the same applicant describes a shower base that is composed of a base in a single piece that is manufactured by moulding a flexible material which adapts to the floor of the building and which is composed of materials such as rubber, silicon, polyurethane foam, polyester, epoxy or another low density material.

WO 2010/086632 discloses a shower base according to the preamble of claim 1.

In the light of the said documents which constitute the state of the art it is possible to appreciate that in none of them is the inclusion of flexible fillings based on recycled tyres described in the manufacturing of the said shower bases, which even so form an element that is rigid and looks like a conventional resin base.

### DESCRIPTION OF THE INVENTION

The basis of the invention is the inclusion of a flexible filling, that comes from the recycling of car tyres, in the manufacturing of shower bases with improved physical properties while maintaining their physical appearance, intrinsic to conventional resin shower bases, but with advantages deriving from the inclusion of the said filling in the manufacturing procedure.

The materials that may be used in the mix to which the flexible filling is added are:
Resins may be used, as binding material, such as polyester, polyurethane, epoxy or any other resin which permits the addition of filling materials and which forms a single body when catalysis takes place.

Different types of minerals may be used, as fillers, such as silicon sand, marble sand, kaolin, barite, crystabolite, slate, mica, titanium dioxide or calcium carbonate, etc. These minerals are used crushed or ground, in different granulometries.

During the mixing process of said components, the flexible filling is added, thereby obtaining the material that will constitute the product which is the object of the invention. The said flexible filling is obtained by crushing or grinding used car tyres.

This new shower base is composed of the mixture of the resin-based binding material + fillers of different types of minerals + flexible fillers obtained by grinding or milling used tyres. The invention therefore not only refers to a new material but to a new material applied to the manufacture of shower bases because these are given improved technical effects deriving from the inclusion of flexible fillings in the mixture.

The main advantages that are obtained in comparison with conventional shower bases are due to the intrinsic insulating characteristics, elasticity and low density of the flexible filling material included in the mixture, and these are:
A reduction in acoustic conductivity, thereby reducing the transmission of noise downstairs when the shower is used.

A reduction in thermal conductivity because the feeling of coldness in the feet is reduced when entering the shower.

An increase in resistance against impact, which thereby improves its behaviour in case of collision (the fall of objects or knocks while being handled, etc.).

An increase in resistance to bending, as the product is somewhat more elastic than conventional ones; this reduces the risk of breakage during transport and handling.

A reduction in environmental impact, as a recycled product is used.

The inventive aspect of this product is that it gives rise to all of these improved technical effects while always maintaining the appearance of a rigid element possessed by the conventional shower bases currently available in the market.

It should be underlined that the inclusion of this flexible filling also reduces the density of the product and leads to an important reduction of the mass of the shower base.

Actually, conventional shower bases manufactured by using resins and aggregates have a density of from 1,410 to 1,800 grams per litre. When the rubber filling, which has a density of 450 g/l, is added we eliminate part of the aggregate such as quartz, which has a density of 1,600 g/l, so that some of the heavy filling is replaced by another lighter one, giving rise to a lighter shower base with a density of 1,050 g/l and with a notable reduction in its mass of from 25% to 30% less, while always keeping and even in some cases increasing the quality of the product.

Thus, a shower base measuring 180x90cm would weight 14 kg less than a conventional one, weighing 34 kg instead of 48 kg if it includes this flexible filling.

As a result of this, the manufacture operations are easier, with effects on:
The filling the mould, as the worker bears less weight when handling the container that holds the mix before pouring it into the mould itself.

When removing the mould the effort which has to be used by the worker to extract the final shower base from the mould is reduced.

Less effort by workers is required for handling the base in the factory for the purposes of checking, cutting and packing.

Storage is improved as the bases can be piled up to a greater height.

Transport costs are reduced as agencies charge according to weight for goods of this type.

Handling during installation is made easier, given that installers need to use less effort when moving the base within the home and placing it where it has to be installed.

Due to all of the above considerations, the inclusion of flexible fillings from the recycling of car tyres in the mixture which forms the material for the manufacture of shower bases has the effect of improving the same, thereby justifying the choice of the said bathroom fittings rather than other similar ones, as the technical effect caused in the latter would be different.

### PREFERRED EMBODIMENT OF THE INVENTION

The flexible fillings to be included coming from the recycling of tyres must have an optimum granulometry and be included in the mixture at a certain proportion to attain good integration of the agglomerant materials, which is based on resins and fillings from different types of minerals.

The optimum granulometry was achieved by means of multiple trials to obtain a mixture as homogeneous as possible, as the density of the flexible filling is lower than that of the other fillings in the mixture and tends to float above them. So that the flexible fillings do not float, it has been found that the particles must be of a size from 0.3 mm - 1.5 mm. Therefore, if the grain size of the flexible filling is too large it would float and a mixture would be obtained in which the filling will be located in the upper part of the part, so that expansion will be imbalanced (the contraction of materials) giving rise to twists in the parts. Otherwise, if the grains of the flexible filling were too small, the rubber would absorb too much of the resins, making the mixture too viscous and reducing the amount of filling that we could add to the mix. Due to all of these reasons, the optimum granulometry corresponds to the largest possible size, on condition that the rubber remains in suspension and contributes to the creation of a homogenous mixture.

According to trials it was also found that the optimum composition in terms of percentages of the components within the mix must be:
The AGGLOMERATING RESINS, which are composed of Polyol and Isocyanate, always have to be mixed in the same proportion of 100 - 70, respectively.

However, the optimum total amount of resins (17.5 %) may be increased or reduced. These resins are the most expensive ingredients of the mixture, so that the aim is to use as small a quantity as possible. The lower limit stands at 15% of the total mixture, as if we reduce this more the risk of breakage is very high, given that the union between the components would be too weak. On the other hand an excess of resin would have no drawback apart from the cost, unless it exceeds 30% of the total, in which case the mixture would be too liquid, and due to the difference between the densities of its components, the heaviest ones would tend to sink during the catalysation time, while the lighter ones would tend to float and the resulting mixture would therefore not be homogeneous, which would cause the distortion of the shower base, due to the components contracting or dilating in different ways.

For the FILLINGS of different types of MINERALS, composed of Calcium Carbonate and Silicon Sand, and the FLEXIBLE FILLINGS from recycled car tyres, the proportions are to be as follows:
Calcium Carbonate is used to obtain an agglomerating mixture of resins that is more binding, thereby ensuring that the other fillings are in suspension. Its optimum proportion will be 16.7%, as if the amount of carbonate is increased excessively, it will not be possible to add as many fillings to the mixture as it will be much too viscous, with the resulting problem of bubbles, while if it is reduced too much then it will be too liquid, and problems with homogenisation will arise. Due to all of the above considerations the range of percentages which must apply to the Calcium Carbonate is from 14.7% to 22.7%, this difference being counterbalanced by the amount of resin and solvent.

The Silicon Sand and the flexible fillings from ground tyres will vary in proportion to the degree in which we increase or reduce the amount of resins. I.e., if we increase the resins by 10% we will have to reduce the sum of the fillings by the same 10%. On the other hand, the sand may be increased while reducing the amount of ground material or vice versa, depending on the required weight of the base. It is possible to use only sand (62.7%), or to increase the amount of flexible filler (rubber) up to 33.5% (29.2% of sand). When it contains too much rubber the mixture is too viscous, as rubber is able to absorb more than silicon sand. This increase in viscosity prevents the air which enters when all of the components are mixed from escaping from inside the compound during catalysation time. As it is trapped inside the mixture, bubbles form which affect the appearance of the shower base. A good proportion is therefore 34.2% silicon sand and 28.5% ground tyres.

Lastly, the SOLVENT used to help to mix the carbonate with the resins and the proportion of the same may vary, depending on the carbonate we wish to add. A good proportion would be 3.1 % of the total mixture.

The optimum proportions of the mixture are shown below:

| | |
|---|---|
| AGGLOMERANT RESINS..................................................................... | 17.5% |
| Polyol.......................................................................................................... | 10.3% |
| Isocyanate................................................................................................ | 7.2% |
| CALCIUM CARBONATE........................................................................ | 16.7% |
| SILICON SAND..................................................................................... | 34.2% |
| GROUND TYRES................................................................................... | 28.5% |
| SOLVENT................................................................................................ | 3.1% |

### DESCRIPTION OF THE FIGURES

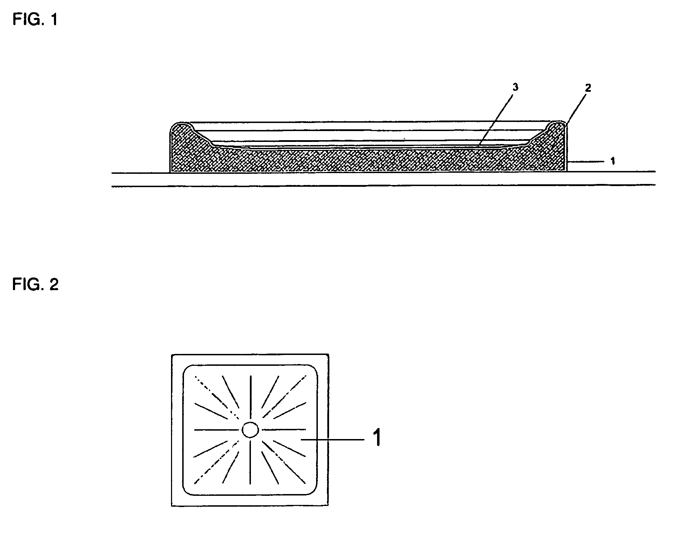

Figure 1: It is a cross-section view of the shower base which is the object of this invention.
Figure 2: It is a top view of the shower base which is the object of this invention.

In both figures it is possible to see that the shower base (1) in cross-section and top view has the external appearance of a rigid element similar to a conventional shower base of those existing in the market, although the material from which it is made (2) is composed of a mixture of agglomerant materials based on resins + fillings of different types of minerals + flexible fillings obtained by grinding or milling used tyres (rubber) with an optimum granulometry of from 0.3 mm-1.5 mm and a composition in percentage terms as described above.

The exterior finish is a varnish (3) which does not crack due to the certain degree of flexibility of the material caused by the proportion of flexible fillings, thereby giving it the appearance of a conventional shower base.

The manufacturing procedure for the shower base is as follows:
The material is prepared in an homogenous way by pouring the resin-based agglomerant mix + the fillings of different types of minerals + flexible fillings obtained by grinding or milling used tyres into a flexible silicon mould which has previously been coated inside with a varnish, which will be what gives the shower base its external appearance once the mixture has set and removed from the mould.

## Claims

1. An improved shower base due to the inclusion in its manufacture of flexible fillings made from recycled car tyres, **characterised in that** the shower base is made using a mixture composed of agglomerant material containing resins and fillings of different types of minerals, to which flexible fillings are added using ground or milled used tyres with an optimum granulometry of from 0.3 mm to 1.5 mm and an optimum composition in percentage terms of each one of its components of: agglomerant resins from 15%-30% of the total mixture, Calcium Carbonate from 14.7%-22.7%, Silicon Sand 34.2% and the flexible fillings based on ground tyres 28.5%, which vary depending on the degree to which the amount of resins is increased or reduced, and lastly the solvent in an optimum proportion of 3.1%, the granulometry and optimum percentages are to obtain a mixture that is as homogeneous as possible, thereby improving the physical and mechanical properties of the shower bases while keeping the external appearance of a rigid mould intrinsic to conventional shower bases.

2. An improved shower base due to the inclusion in its manufacture of flexible fillings made from recycled car tyres, according to claim 1, **characterised in that** the material for manufacturing is prepared homogeneously by pouring the mixture of resin-based agglomerant, fillings of different types of minerals and flexible fillings obtained by grinding or milling used tyres, into a flexible silicon mould which has previously been coated with a varnish that will give the shower plate its appearance when the mixture sets and is removed from the mould.

## Patentansprüche

1. Eine verbesserte Duschwanne infolge des Einschlusses bei der Herstellung von flexiblen Füllkörpern aus wiederverwerteten Radreifen, **dadurch gekennzeichnet dass**, die Duschwanne aus einer Mischung von Agglomerationsmittel mit einem Inhalt an Harz und Füllmaterial verschiedener Mineralarten zusammengesetzt ist, Mischung zu der flexible Füllkörper hinzugefügt werden unter Verwendung von zerkleinerten oder zermahlenen Radreifen mit einer optimalen Granulometrie von 0,3 mm bis 1,5 mm und einer optimalen, prozentualen Zusammensetzung der verschiedenen Komponenten von: Agglomerationsharz von 15-30% der Gesamtmischung, Kalziumkarbonat von 14,7-22,7%, Quarzsand 34,2% und die flexiblen Füllkörper basierend auf zerkleinerten Radreifen 28,5%, diese können sich abhängig von der grösseren oder kleineren Harzmenge ändern, und zuletzt das Lösemittel in einer optimalen Proportion von 3,1%, die Granulometrie und die optimalen Prozentsätze für den Erhalt einer soweit wie möglich homogenen Mischung, wodurch die physischen und mechanischen Eigenschaften der Duschwanne verbessert werden, während der äussere Aspekt einer materialeigenen, harten Form der Duschwannen erhalten bleibt.

2. Eine verbesserte Duschwanne infolge des Einschlusses bei der Herstellung von flexiblen Füllkörpern aus wiederverwerteten Radreifen übereinstimmend mit Anspruch 1, **dadurch gekennzeichnet, dass** der Werkstoff für die Herstellung homogen vorbereitet wird, indem die Mischung aus dem Agglomerationsmittel basierend auf Harz, dem Füllmaterial verschiedener Mineralarten und den flexiblen Füllkörpern, die durch die Zerkleinerung oder Zermahlung von gebrauchten Radreifen erhalten werden, in eine flexible Silikongussform gegossen wird, Gussform, die vorher mit einem Lack überzogen wurde, der der Duschwanne ihr Aussehen verleiht, wenn die Mischung erstarrt und aus der Gussform entnommen wird.

## Revendications

1. Receveur de douche améliorégrâce à l'inclusion, pendant son processus de fabrication, de matériaux de remplissage flexibles faits à partir de pneus d'automobile recyclés, **caractérisé en ce que** cereceveur de douche est fabriquédans un mélange composé de matériau agglomérantqui contient des résines et des matériaux de remplissage à base de différents types de minéraux, auquel les matériauxde remplissage flexibles sont ajoutés, ceux-ciprovenant de pneus usagés broyés ou moulus comportant une granulométrie optimale de 0,3 mm à 1,5 mm, et dont chaque composant a une composition optimale en termes de pourcentage de: à partir de 15%-30% pour lesrésines agglomérantes du mélange total ;14,7 %-22,7 % pour le carbonate de calcium ;34,2 % pour le sable de silicium; et 28,5 % pourlesmatériauxde remplissage flexibles formés à partir de pneus broyés,ce qui varie en fonction de l'augmentation ou de la diminution souhaitée de la quantité de résines ;pour finir,une proportion optimale de 3,1 % pourle solvant ;ainsi la granulométrie et les pourcentages optimaux donnent unmélange qui est aussi homogène que possible, ce qui améliore les propriétés physiques et mécaniques des récepteurs de douche, tout en préservant l'apparence extérieure de moule rigide, qui est intrinsèque aux récepteurs de douche conventionnels.

2. Receveur de douche amélioré grâce à l'inclusion, pendant son processus de fabrication, de matériaux de remplissage flexibles faits à partir de pneus d'automobile recyclés, selon la revendication 1, **caractérisé en ce que** le matériau de fabrication est préparé de façon homogène encoulant lemélange d'agglomérant formé de résine, de matériaux de remplissage à base de différents types de minéraux, et de matériauxde remplissage flexibles obtenus en broyant ou moulant des pneus usagés, dans un moule de silicium souple qui a été,au préalable,enduit d'un vernis qui donnera au bac de douche son apparence une fois que lemélangeaura durci et aura été retiré du moule.
